# EUROPEAN PATENT SPECIFICATION

(11) **EP 1 721 553 B1**
(45) Date of publication and mention of the grant of the patent: **10.12.2008**
(21) Application number: 05016667.7
(22) Date of filing: 01.08.2005
(51) Int. Cl.: A47J 31/40, A47J 31/06

(54) **Infusion assembly for beverage preparing machine**
Infusionsanordnung für Getränkebereitungsmaschine
Ensemble d'infusion pour appareil de préparation de boissons

(30) Priority: 12.05.2005 IT MI20050854
(43) Date of publication of application: 15.11.2006
(73) Proprietor: PERFECT STEAM APPLIANCES LTD., FO TAN, SHATIN, N.T. (HK)
(72) Inventor: Aardenburg, Kees, 6900 Lugano (CH)
(74) Representative: Modiano, Micaela Nadia

(56) References cited:
- EP-A- 1 444 932
- WO-A-20/05004683
- WO-A-20/05058111

## Description

The present invention relates to an infusion assembly for a beverage preparing machine. More particularly, the invention relates to an infusion assembly for a machine for preparing beverages such as coffee, tea, cappuccino, and the like.

As is known, machines for preparing beverages such as coffee, cappuccino, tea, and the like, used both in workplaces and at home, are increasingly widespread.

The use of so-called capsules i.e., of specific sealed containers meant to be introduced in an infusion assembly which allows to release the content of the capsule and to prepare the beverage for dispensing to the user, with subsequent disposal of the capsule, is also increasingly widespread.

The use of capsules simplifies considerably the use of automatic machines for preparing beverages in general, since the user is not required, for example in the case of coffee, to fill a dosage unit with the required amount of coffee, couple the dosage unit to the machine and then wait for the coffee to be dispensed. In the case of capsules, the user merely has to insert the prepackaged capsule into an appropriately provided receptacle, operate a closure lever and wait for the machine to dispense the beverage for which the capsule has been prepared.

Many automatic and semiautomatic assemblies are commercially available which have been designed to use a capsule or pod (single portion): assemblies in which the capsule or pod is introduced from the top, from the front, laterally or by means of a traditional method which uses a filter supporting arm, as occurs for conventional machines for use in bars.

However, the increasing demand is for infusion assemblies which, at the end of the dispensing process, are capable of expelling the capsule or pod, sparing the user from becoming dirty or from dirtying the environment that surrounds the machine and from having to handle the used capsule or pod.

Capsules are commercially available which are composed of two or more parts, in thermoplastics, in aluminum or other materials in order to ensure good preservation of the product.

In known types of automatic and semiautomatic infusion assembly, the capsule, while the beverage is being dispensed, is for example surrounded by two movable jaws, which contain it, and when a new capsule is introduced it pushes and expels the preceding one.

The system described above is simple and clean, but the used capsule (which is still full of beverage preparation, for example coffee) remains in the hot infusion chamber until the machine is used again by introducing a subsequent capsule.

Capsules are also commercially available which, by virtue of their production by thermoforming, do not need to be packaged in an additional bag.

There are also capsules provided with a patented perforation system, which does not provide for an external packaging.

Another known type of infusion assembly provides for a horizontal assembly with an opening for inserting the capsule, and positioning occurs by virtue of two fixed guides, in which there is an abutment beyond which the aluminum rim of the capsule can move, the capsule being moved into the dispensing position by virtue of the rearward thrust of the infusion chamber, which in turn is actuated by a lever. When the lever is opened, the chamber retracts and the rim of the capsule strikes the fixed guide, and therefore the capsule is released and falls spontaneously.

WO 2005/004683 discloses a infusion assembly as defined in the preamble of claim 1.

The aim of the present invention is to provide an infusion assembly for beverage dispensing machines that allow a guided insertion of the capsule and its positioning and locking at the end of the dispensing action so as to ensure its fall.

Within this aim, an object of the present invention is to provide an infusion assembly for beverage dispensing machines that can be adapted to any type of capsule, of any format and material.

Another object of the present invention is to provide an infusion assembly for beverage dispensing machines that can be actuated manually, semi-automatically or in an automatic cycle, always and in any case expelling the capsule automatically after use.

A further object of the present invention is to provide an infusion assembly for beverage dispensing machines that can be adapted easily to the various types of movement normally used for this type of mechanism and substantially with a manual mechanical movement operated by levers and cams, with a hydraulic movement, with a movement actuated by an electric gearmotor, and the like.

A still further object of the present invention is to provide an infusion assembly that is highly reliable, relatively simple to manufacture and at competitive costs.

This aim and these and other objects that will become better apparent hereinafter are achieved by an infusion assembly for a machine for preparing beverages and subsequently dispensing them, as defined in claims 1 and 8.

Further characteristics and advantages of the invention will become better apparent from the description of a preferred but not exclusive embodiment of the infusion assembly according to the present invention, illustrated by way of non-limiting example in the accompanying drawings, wherein:
Figure 1 is a perspective view of the infusion assembly according to a first embodiment of the present invention;
Figure 2 is an exploded perspective view of the infusion assembly of Figure 1;
Figure 3 is a perspective view of a detail of the infusion assembly according to the first embodiment of the invention;
Figure 4 is a side elevation view of the infusion assembly according to the first embodiment of the present invention, with the lever in the open condition;
Figure 5 is a side elevation view of the infusion assembly according to the first embodiment of the present invention, with the lever in the closed condition;
Figure 6 is a top plan view of a detail of the operation of the infusion assembly according to the first embodiment of the present invention, in a first operating position;
Figure 7 is a top plan view of a second operating position of the infusion assembly according to the first embodiment of the present invention;
Figure 8 is a top plan view of the final position of the infusion assembly shown in the preceding figures, just before the capsule falls;
Figure 9 is a top plan view, similar to Figure 6, but with the capsule having a thicker rim;
Figure 10 is a perspective view of a second embodiment of the present invention;
Figure 11 is an exploded view of the second embodiment of the infusion assembly according to the present invention.

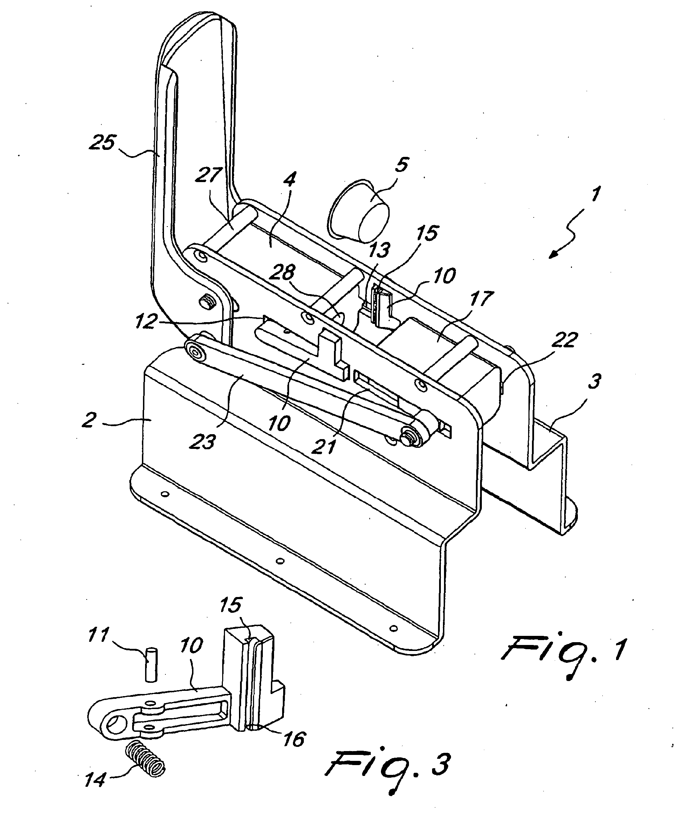

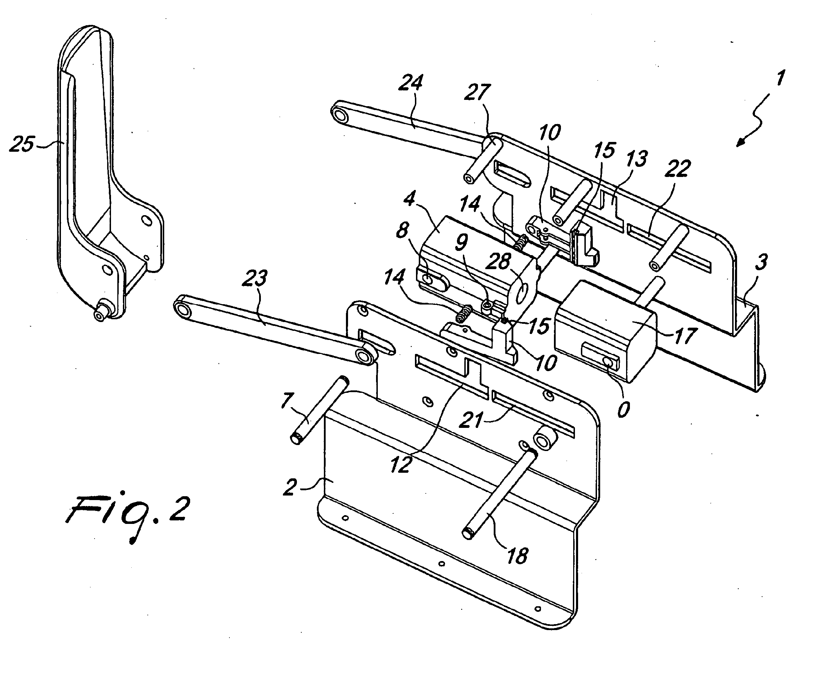

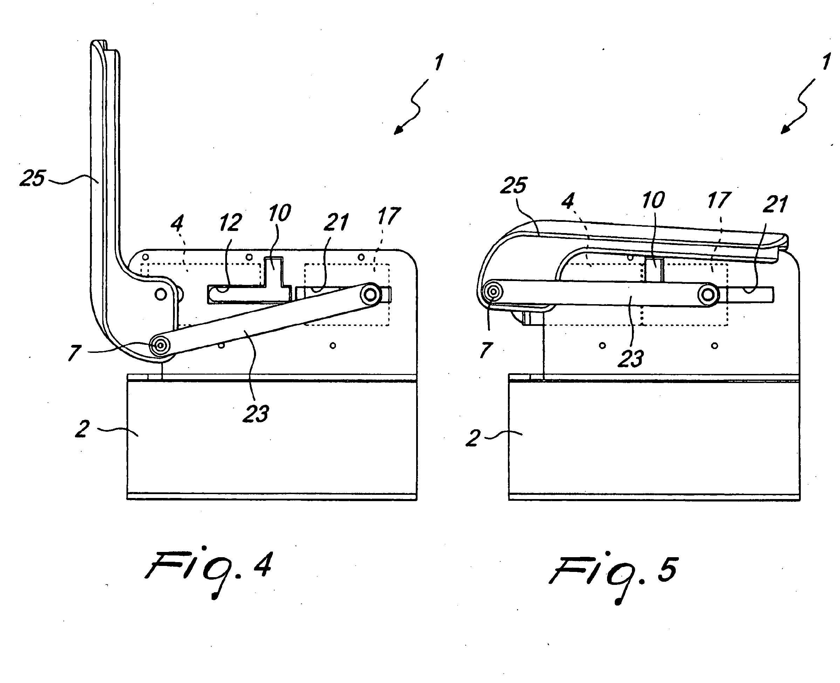

With reference to the figures cited above, and initially to Figures 1-9, the infusion assembly according to the present invention, generally designated by the reference numeral 1, comprises a first shoulder 2 and a second shoulder 3, which are suitable to accommodate internally a cylinder 4 for supporting a capsule, designated by the reference numeral 5 and provided with a perimetric rim 6 which protrudes with respect to the body of the capsule.

The capsule supporting cylinder is connected to the shoulders 2 and 3 by virtue of a pivot 7, which engages a hole 8 formed through the cylinder.

The cylinder 4 furthermore has, at each one of its sides, a protrusion 9 provided with a hole suitable to allow connection of means 10 for locking the capsule 5. Conveniently, the locking means 10 comprise two arms 10, each of which is pivoted, by virtue of a respective pivot 11, at the respective protrusion 9 and are kept elastically spaced from the lateral surface of the piston 4 by virtue of the presence of a spring 14, for example of the helical type.

The arms 10 face each other through slots 12 and 13, respectively defined in the shoulders 2 and 3, which are shaped exactly like the lateral profile of each arm, so that the arm is pivoted at the protrusion 9, by virtue of the pivot 11, and can be moved elastically toward the lateral surface of the cylinder 4, by virtue of the presence of the spring 14, thus spacing apart the arms, in order to allow them to disengage from the capsule 5.

Each arm is provided with a guiding groove 15, which is arranged substantially vertically with respect to the longitudinal axis of the cylinder 4 and is suitable to accommodate the perimetric rim 6 of the capsule 5.

Conveniently, the guiding groove 15 is shaped so as to have a curved profile at the bottom of the groove, designated by the reference numeral 16, so that the capsule 5 can be arranged within the facing slots 15 of the respective arms 10 and rests, at the end of its stroke, against the lower end 16 of the guiding groove 15 of each arm, thus being locked within the slots and being therefore unable to fall when the arms 10 are engaged with the rim of the capsule.

Essentially, therefore, the locking means constituted by the arms 10 engaged the perimetric rim 6 of the capsule 5, keeping the capsule clamped between them.

A piston 17 for closing the capsule 5 is provided so that it can move longitudinally along the shoulders 2 and 3, by virtue of the sliding of a pivot 18 thereof, which engages, after passing through spacing bushes 19, a lateral hole 20, which passes through the piston 17, the piston 18 being able to perform a translational motion within two slots 21 and 22 formed respectively within the shoulder 2 and within the shoulder 3 of the infusion assembly.

A linkage 23 and 24 is pivoted to the pivot 18 for each shoulder 2 and 3 respectively and in turn is pivoted to lever means 25, which allow, by virtue of their movement from a substantially vertical position, at right angles to the longitudinal axis of the cylinder 40 of the piston 17, to a position that is parallel to said longitudinal axis, a translational motion of the piston 17 along the slots 21 and 22.

Conveniently, the piston 17 is provided internally with a receptacle 25 for accommodating the capsule 5 and with an exit hole for the infused beverage, which is not shown in the drawings.

Pins 27 allow to connect the shoulders 2 and 3 to each other, so as to enclose said components between the shoulders.

The illustrated lever 25 is only one of the possible means for moving the piston 17 for closing the capsule, since it is possible to provide, in addition to said lever means 25, hydraulic means, or an actuation by virtue of electrical gearmotors and the like.

Conveniently, the cylinder 4 is provided with a receptacle 28 for accommodating an element for supporting/piercing the capsule 5.

With reference to the figures cited above, the operation of the infusion assembly according to the present invention is as follows.

The user, with the lever in the open position, as shown in Figure 1, inserts a capsule 5 within the guiding means 15, checking that the capsule 5 reaches the end of its path, resting at the lower ends 16 of the guides 15.

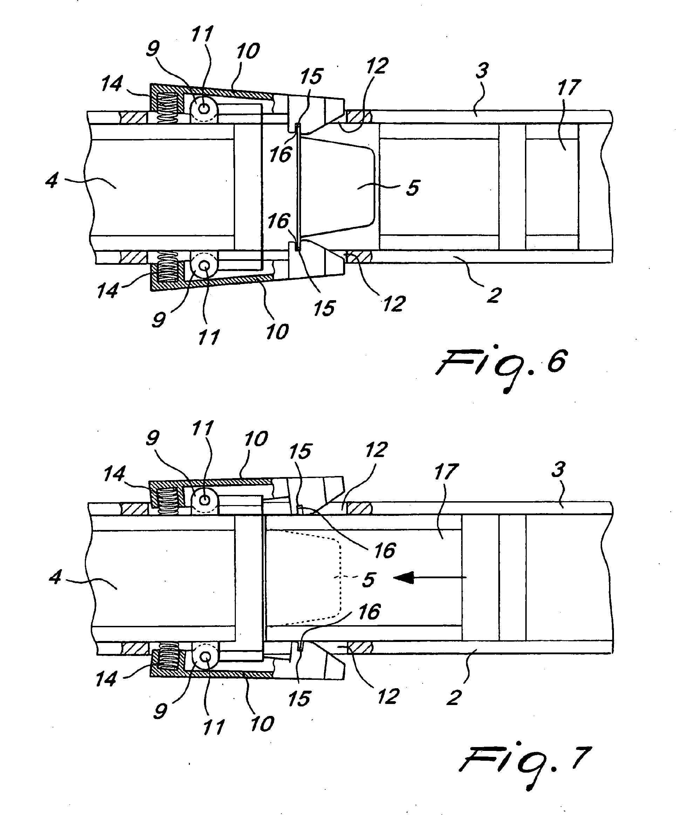

Once the capsule has been inserted in the infusion assembly, as shown in Figure 6, the operator, either manually or by means of an automatic system, moves the lever means 25, or any other means suitable to produce a translational motion of the piston 17, into the closure position, thus allowing the translational motion of the piston 17 toward the capsule 5. In this manner, the capsule 5 enters the receptacle formed within the piston 17, as shown in Figure 7.

The forward sliding of the piston 17 causes said piston, by virtue of the presence of an inclined plane 30 at their mutually facing surface, to mutually separate the arms 10, which by being pivoted on the pivot 11 and by virtue of the presence of the spring 14 protrude from the slots 12 and 13 of the shoulders 2 and 3.

Accordingly, the configuration of the infusion assembly changes from the one shown in Figure 6, in which the arms 10 keep the capsule 5 firmly retained between their guides 15 and the piston 17 is external and retracted with respect to the capsule, to a configuration shown in Figure 7, in which the piston 17 is arranged forward, opening out the arms 10 and fitting around the capsule 5. In this configuration, the beverage is infused and subsequently dispensed to the user.

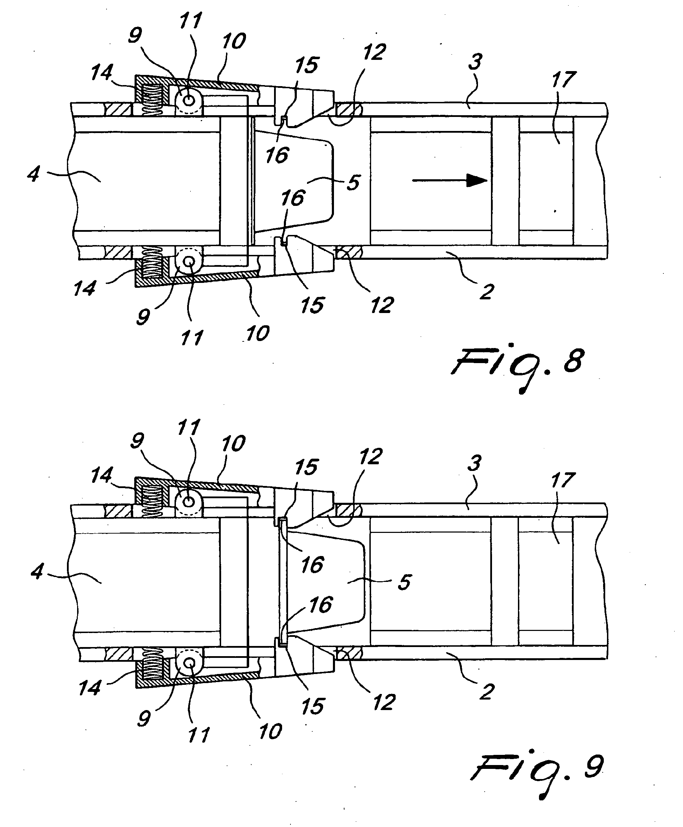

When the infusion assembly reopens, i.e., when the user reopens the lever 25 in order to return it to the vertical position with respect to the longitudinal axis of the cylinder 4 of the piston 17, the piston 17 retracts and at the same time the arms 10 return to their original position and prevent the capsule 5 from retracting, therefore giving assurance that the capsule will fall. This condition is shown in Figure 8, which clearly shows that the arms 10 are in the closed position but do not engage the rim of the capsule 5, which is adjacent to the cylinder 4. Backward movement of the capsule is therefore prevented by the fact that the rim of the capsule would strike the ends of the arms 10, which accordingly constitute a stroke limit for the capsule, which has no other option except to fall, since it is no longer retained.

The infusion assembly described above can be adapted substantially to any type of capsule, since by sizing appropriately the space between the shoulders 2 and 3 it is possible to accommodate capsules of any size, and it is likewise possible, by appropriately sizing the guides 15, to accommodate capsules with rims 6 that have different thicknesses, as illustrated for example in Figure 8, which illustrates a capsule 5 which has a much thicker rim 6 than the capsule 5 illustrated in the preceding figures.

Therefore, the infusion assembly according to the invention allows guided insertion of the capsule 5, its positioning and its locking at the end of the dispensing process so as to ensure its fall.

All this occurs without the user having to insert a subsequent capsule, because the first one falls.

Therefore, the solution proposed above allows to avoid having an empty capsule permanently inserted within the infusion assembly, which remains hot for a long time, and from having to insert a subsequent capsule to make the first one fall and then remove it.

The infusion assembly thus conceived is susceptible of numerous modifications and variations, all of which are within the scope of the appended claims.

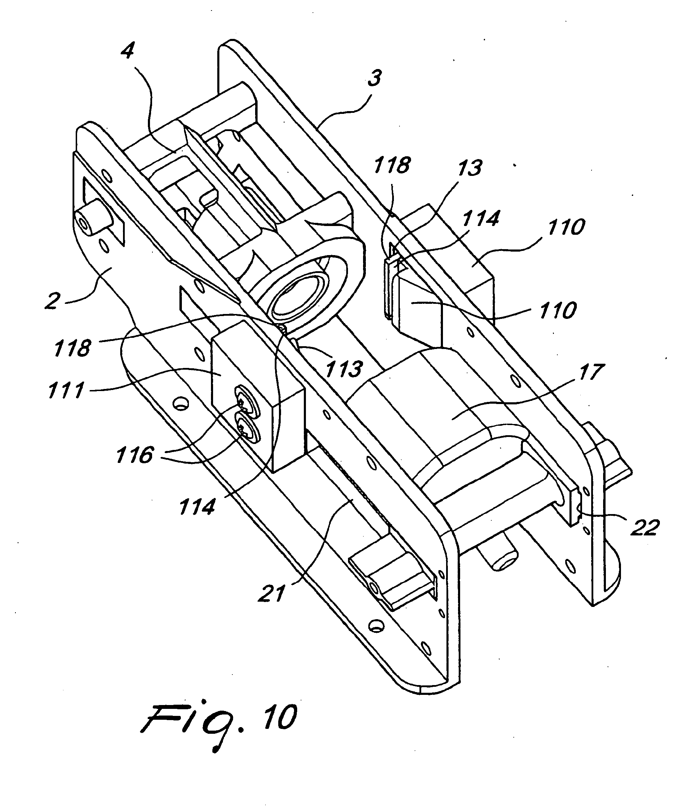

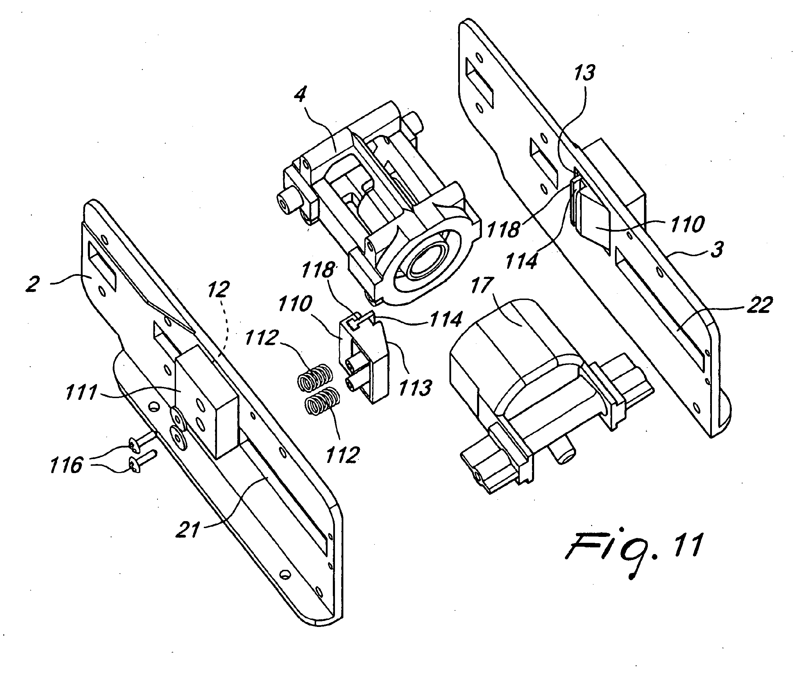

Figures 10 and 11 illustrate a second embodiment of the present invention, in which the locking means, constituted by two arms 10 in the first embodiment, in this case are constituted by two blocks 110, which are screwed to the pair of shoulders 2 or 3, within respective external blocks 111, by virtue of screws 116, after interposing elastic means constituted for example by springs 112.

Essentially, the two blocks 110 are accommodated within the slots 12 and 13 formed in the two shoulders 2 and 3 respectively, and are screwed in the external blocks 111 so as to be able to perform a translational motion which is perpendicular to the motion performed by the infusion piston.

Each one of the blocks 110 is provided with an inclined surface 113, so that the piston, as it advances, can allow the translational motion of the blocks 110 at right angles to the direction of its advancement, compressing the springs 112.

Furthermore, the blocks 110 are provided with a groove 114, in which the rim of the capsule engages, in a manner similar to the first embodiment. Conveniently, the groove 114 is formed by a shoulder which is formed on the block 110 on one side and by an opposite element 118, which can be integral with the block 110 or a flexible insert, and which forms the second wall of the groove 114. The flexible element can be made for example of rubber or other elastically flexible material.

All the details may furthermore be replaced with other technically equivalent elements.

In practice, the materials used, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An infusion assembly for a machine for preparing beverages and subsequently dispensing them, comprising a first shoulder (2) and a second shoulder (3), which face each other and are suitable to contain a cylinder (4) for supporting a capsule (5) which contains a preparation for beverages, a piston (17) for closing said capsule (5), which is suitable to move into a position in which said capsule (5) is inserted in a receptacle formed within said piston, movement means suitable to move said piston, locking means (10) which are suitable to allow the insertion of said capsule (5) and its locking, said locking means (10) being movable from a position for locking said capsule to a position, as a consequence of a translational motion of said piston (17), that is suitable to allow the insertion of said capsule (5) in said piston (17), said locking means (10) being suitable to prevent a backward movement of said capsule (5) when said piston (17) returns to the inactive condition, thus allowing said capsule (5) to fall for its disposal, said locking means (10) comprising two arms (10), which are pivoted to the lateral surfaces of said capsule supporting cylinder (4), each one of said arms (10) being provided with a guiding groove (15), which is arranged substantially vertically with respect to the longitudinal axis of said cylinder (4), **characterized in that** each one of said arms (10) is provided with an inclined plane, which is suitable to allow the engagement of said piston (17) when said piston performs a translational motion with respect to said capsule supporting cylinder (4), so as to allow to move said arms (10) mutually apart, in order to disengage said capsule from said arms (10), and allow to accommodate said capsule within said piston (17).

2. The infusion assembly according to claim 1, **characterized in that** said arms (10) are provided with elastic means (14; 112) interposed between one end of said arms (10), which lies opposite the end provided with the guiding groove (15), and the lateral surface of said capsule supporting cylinder (4).

3. The infusion assembly according to claim 1, **characterized in that** each one of said shoulders (2, 3) comprises a slot (12), which is contoured according to the profile of said arm (10) in order to allow the passage of said arm from the position for locking said capsule (5) to the position in which said capsule (5) is loose by virtue of the spacing of said arms (10).

4. The infusion assembly according to one or more of the preceding claims, **characterized in that** said piston (17) is suitable to perform a longitudinal translational motion with respect to said capsule supporting cylinder (4), by virtue of the sliding of a transverse pivot thereof within two mutually facing slots (21) formed within the first and second shoulders (2, 3).

5. The infusion assembly according to one or more of the preceding claims, **characterized in that** said means suitable to produce the translational motion of said piston comprise lever means (25), which are connected to a pair of linkages (23) pivoted to said piston (17).

6. The infusion assembly according to one or more of the preceding claims, **characterized in that** said piston (17) for closing the capsule comprises, at its face that faces said capsule (5), a receptacle (25) for accommodating means for supporting/piercing said capsule.

7. The infusion assembly according to claim 5, **characterized in that** said lever means (25) are pivoted at the end of said first and second shoulders (2, 3).

8. An infusion assembly for a machine for preparing beverages and subsequently dispensing them, comprising a first shoulder (2) and a second shoulder (3), which face each other and are suitable to contain a cylinder (4) for supporting a capsule (5) which contains a preparation for beverages, a piston (17) for closing said capsule (5), which is suitable to move into a position in which said capsule (5) is inserted in a receptacle formed within said piston, movement means suitable to move said piston, locking means (110) which are suitable to allow the insertion of said capsule (5) and its locking, said locking means (110) being movable from a position for locking said capsule to a position, as a consequence of a translational motion of said piston (17), that is suitable to allow the insertion of said capsule (5) in said piston (17), said locking means (110) being suitable to prevent a backward movement of said capsule (5) when said piston (17) returns to the inactive condition, thus allowing said capsule (5) to fall for its disposal, said locking means (110) being provided with a guiding groove (114), which is arranged substantially vertically with respect to the longitudinal axis of said cylinder (4), **characterized in that** said locking means comprise two blocks (110), which are connected to said first (2) and second (3) shoulders, each one of said blocks (110) being provided with said guiding groove (114), and **in that** each one of said blocks (110) is provided with an inclined plane, which is suitable to allow the engagement of said piston (17) when said piston performs a translational motion with respect to said capsule supporting cylinder (4), so as to allow to move said blocks (110) mutually apart, in order to disengage said capsule from said blocks (110), and allow to accommodate said capsule within said piston (17).

9. The infusion assembly according to claim 8 **characterized in that** each one of said blocks (110) is accommodated in a slot (12) which is shaped complementarily with respect to said block, said block being screwed onto another additional block (111) arranged outside the shoulder (2, 3), with the interposition of elastic means (112) in order to allow a translational motion of the block at right angles to the advancement direction of said piston (17).

10. The infusion assembly according to claim 9, **characterized in that** the groove (114) of said block (110) is formed by a shoulder which is formed in said block (110) on one side and by an opposite shoulder (118) on the other side.

11. The infusion assembly according to claim 10, **characterized in that** said shoulder and said opposite shoulder (118) are rigid and integral with said block (110).

12. The infusion assembly according to claim 10, **characterized in that** said opposite shoulder (118) is a flexible insert.

13. The infusion assembly according to one or more of claims 8 to 12, **characterized in that** each one of said blocks (110) has an inclined plane, which is suitable to allow the advancement of said piston (17) in engagement with said block (110) when said piston performs a translational motion with respect to said capsule supporting cylinder (4), so as to allow to move said blocks mutually apart in order to disengage said capsule (5) from said blocks and allow to accommodate said capsule within said piston (17).

14. A, method for infusion of a beverage by means of an infusion assembly according to one or more of the preceding claims, **characterized in that** it comprises the steps of:
inserting a capsule (5) in the infusion assembly, inserting the perimetric rim of said capsule in the pair of mutually opposite guides (15; 114) of said locking means (10; 110);
producing a translational motion of said piston (17) toward said capsule (5) in order to accommodate said capsule (5) within said piston (17), simultaneously moving mutually apart said locking means (10; 110) and disengaging them from the rim of the capsule (5), in order to allow said capsule (5) to enter a receptacle of said piston (17);
waiting for the end of the infusion and dispensing of the beverage;
actuating said piston (17) so as to retract, in order to release said capsule (5) and in order to cause said locking means (to return to the initial position, preventing said capsule (5) from retracting and allowing said capsule to fall.

## Patentansprüche

1. Eine Infusionsanordnung für eine Maschine zur Herstellung von Getränken und ihre anschließende Abgabe, die eine erste Schulter (2) und eine zweite Schulter (3) umfasst, welche einander gegenüberliegen und geeignet sind, einen Zylinder (4) zum Tragen.einer Kapsel (5) zu enthalten, die eine Zubereitung für Getränke enthält, einen Kolben (17) zum Schließen der Kapsel (5), der geeignet ist, sich in eine Position zu bewegen, in der die Kapsel (5) in eine in dem Kolben gebildete Aufnahme eingeführt wird, Bewegungsmittel, die geeignet sind, den Kolben zu bewegen, Feststellmittel (10), die geeignet sind, das Einführen der Kapsel (5) und ihr Feststellen zu ermöglichen, wobei die Feststellmittel (10) aus einer Position zum Feststellen der Kapsel in eine Position bewegt werden können, und zwar infolge einer translatorischen Bewegung des Kolbens (17), die geeignet ist, das Einführen der Kapsel (5) in den Kolben (17) zu ermöglichen, wobei die Feststellmittel (10) geeignet sind, eine Rückwärtsbewegung der Kapsel (5) zu verhindern, wenn der Kolben (17) in den inaktiven Zustand zurückkehrt, wodurch der Kapsel (5) gestattet wird, zwecks ihrer Entsorgung zu fallen, wobei die Feststellmittel (10) zwei Arme (10) umfassen, welche drehgelenkig an den seitlichen Oberflächen des die Kapsel tragenden Zylinders (4) angeordnet sind, wobei jeder der Arme (10) mit einer Führungsnut (15) versehen ist, die im Wesentlichen vertikal zur Längsachse des Zylinders (4) angeordnet ist, **dadurch gekennzeichnet, dass** jeder der Arme (10) mit einer geneigten Ebene versehen ist, die geeignet ist, das Eingreifen des Kolbens (17) zu ermöglichen, wenn der Kolben eine translatorische Bewegung in Bezug zu dem die Kapsel tragenden Zylinder (4) durchführt, um es zu ermöglichen, die Arme (10) voneinander fort zu bewegen, um die Kapsel von den Armen (10) zu lösen und um es zu ermöglichen, die Kapsel im Kolben (17) aufzunehmen.

2. Die Infusionsanordnung gemäß Anspruch 1, **dadurch gekennzeichnet, dass** die Arme (10) mit elastischen Mitteln (14, 112) ausgestattet sind, welche zwischen einem Ende der Arme (10), das gegenüber dem mit der Führungsnut (15) versehenen Ende liegt, und der seitlichen Oberfläche des die Kapsel haltenden Zylinders (4) angebracht sind.

3. Die Infusionsanordnung gemäß Anspruch 1, **dadurch gekennzeichnet, dass** jeder der Schultern (2, 3) einen Schlitz (12) umfasst, der entsprechend dem Profil des Arms (10) profiliert ist, um den Übergang des Arms aus der Position zum Feststellen der Kapsel (5) in die Position zu ermöglichen, in welcher die Kapsel (5) aufgrund des Abstands zwischen den Armen (10) lose ist.

4. Die Infusionsanordnung gemäß einem oder mehreren der obigen Ansprüche, **dadurch gekennzeichnet, dass** der Kolben (17) geeignet ist, eine translatorische Bewegung in Längsrichtung zu dem die Kapsel haltenden Zylinder (4) durchzuführen, und zwar durch das Gleiten eines querliegenden Drehzapfens davon in zwei einander gegenüberliegenden Schlitzen (21), die in der ersten und der zweiten Schulter (2, 3) gebildet sind.

5. Die Infusionsanordnung gemäß einem oder mehreren der obigen Ansprüche, **dadurch gekennzeichnet, dass** die Mittel, die geeignet sind, die translatorische Bewegung des Kolbens zu erzeugen, Hebelmittel (25) umfassen, welche mit einem Gestänge-Paar (23) verbunden sind, das drehgelenkig am Kolben (17) befestigt ist.

6. Die Infusionsanordnung gemäß einem oder mehreren der obigen Ansprüche, **dadurch gekennzeichnet, dass** der Kolben (17) zum Schließen der Kapsel an seiner Fläche, die zur Kapsel (5) hin weist, eine Aufnahme (25) zur Aufnahme von Mitteln zum Halten/Durchstechen der Kapsel umfasst.

7. Die Infusionsanordnung gemäß Anspruch 5, **dadurch gekennzeichnet, dass** die Hebelmittel (25) am Ende der ersten und der zweiten Schulter (2, 3) drehgelenkig angeordnet sind.

8. Eine Infusionsanordnung für eine Maschine zur Herstellung von Getränken und ihre anschließende Abgabe, die eine erste Schulter (2) und eine zweite Schulter (3) umfasst, welche einander gegenüberliegen und geeignet sind, einen Zylinder (4) zum Tragen einer Kapsel (5) zu enthalten, die eine Zubereitung für Getränke enthält, einen Kolben (17) zum Schließen der Kapsel (5), der geeignet ist, sich in eine Position zu bewegen, in der die Kapsel (5) in eine in dem Kolben gebildete Aufnahme eingeführt wird, Bewegungsmittel, die geeignet sind, den Kolben zu bewegen, Feststellmittel (110), die geeignet sind, das Einführen der Kapsel (5) und ihr Feststellen zu ermöglichen, wobei die Feststellmittel (110) aus einer Position zum Feststellen der Kapsel in eine Position bewegt werden können, und zwar infolge einer translatorischen Bewegung des Kolbens (17), die geeignet ist, das Einführen der Kapsel (5) in den Kolben (17) zu ermöglichen, wobei die Feststellmittel (110) geeignet sind, eine Rückwärtsbewegung der Kapsel (5) zu verhindern, wenn der Kolben (17) in den inaktiven Zustand zurückkehrt, wodurch der Kapsel (5) gestattet wird, zwecks ihrer Entsorgung zu fallen, wobei die Feststellmittel (110) mit einer Führungsnut (114) versehen sind, die im Wesentlichen vertikal zur Längsachse des Zylinders (4) angeordnet ist, **dadurch gekennzeichnet, dass** die Feststellmittel zwei Blöcke (110) umfassen, die mit der ersten (2) und der zweiten (3), Schalter verbunden sind, wobei jeder der Blöcke (110) mit einer Führungsnut (114) versehen ist, und **dadurch** dass jeder der Blöcke (110) mit einer geneigten Ebene versehen ist, die geeignet ist, das Eingreifen des Kolbens (17) zu ermöglichen, wenn der Kolben eine translatorische Bewegung in Bezug zu dem die Kapsel tragenden Zylinder (4) durchführt, um es zu ermöglichen, die Blöcke (110) voneinander fort zu bewegen, um die Kapsel von den Blöcken (110) zu lösen und um es zu ermöglichen, die Kapsel im Kolben (17) aufzunehmen.

9. Die Infusionsanordnung gemäß Anspruch 8, **dadurch gekennzeichnet, dass** jeder der Blöcke (110) in einem Schlitz (12) untergebracht ist, der komplementär zu dem Block geformt ist, wobei der Block auf einen anderen zusätzlichen Block (111) aufgeschraubt ist, der außerhalb der Schulter (2, 3) angebracht ist, wobei elastische Mittel (112) zwischengefügt sind, um eine translatorische Bewegung des Blocks in rechten Winkeln zur Vorschunbsrichtung des Kolbens (17) zu ermöglichen.

10. Die Infusionsanordnung gemäß Anspruch 9, **dadurch gekennzeichnet, dass** die Führungsnut (114) des Blocks (110) von einer Schulter gebildet wird, die in dem Block (110) auf einer Seite geformt ist, und von einer gegenüberliegenden Schulter (118) auf der anderen Seite.

11. Die Infusionsanordnung gemäß Anspruch 10, **dadurch gekennzeichnet, dass** die Schulter und die gegenüberliegende Schulter (118) starr sind und integral mit dem Block (110) ausgebildet sind.

12. Die Infusionsanordnung gemäß Anspruch 10, **dadurch gekennzeichnet, dass** die gegenüberliegende Schulter (118) ein flexibler Einsatz ist.

13. Die Infusionsanordnung gemäß einem oder mehreren der Ansprüche 8 bis 12, **dadurch gekennzeichnet, dass** jeder der Blöcke (110) eine geneigte Ebene hat, welche geeignet ist, die Bewegung des Kolbens (17) im Eingriff mit dem Block (110) zu ermöglichen, wenn der Kolben eine translatorische Bewegung in Bezug zu dem die Kapsel haltenden Zylinder (4) durchführt, um es zu ermöglichen, die Blöcke voneinander fort zu bewegen, um die Kapsel (5) aus den Blöcken zu lösen und es zu ermöglichen, um die Kapsel in den Kolben (17) aufzunehmen.

14. Ein Verfahren zum Aufbrühen eines Getränks mit Hilfe einer Infusionsanordnung gemäß einem oder mehreren der obigen Ansprüche, **dadurch gekennzeichnet, dass** es folgende Schritte umfasst:
Einsetzen einer Kapsel (5) in die Infusionsanordnung, Einsetzen des Außenrands der Kapsel in das Paar einander gegenüberliegender Führungen (15, 114) der Feststellmittel (10, 110),
Erzeugung einer translatorischen Bewegung des Kolbens (17) zur Kapsel (5) hin, um die Kapsel (5) im Kolben (17) aufzunehmen, wobei gleichzeitig die Feststellmittel (10, 110) auseinander bewegt und vom Rand der Kapsel (5) gelöst werden, damit die Kapsel (5) in einer Aufnahme des Kolbens (17) eindringen kann,
Warten auf das Ende der Infusion und Ausgabe des Getränks,
Betätigung des Kolbens (17), um ihn zurückzuziehen, um die Kapsel (5) zu lösen und zu bewirken, dass die Feststellmittel in die Ausgangsposition zurückkehren, wodurch die Kapsel (5) am Rückziehen gehindert und fallen gelassen wird.

## Revendications

1. Ensemble à infusion pour une machine conçue pour préparer des boissons et pour ensuite les distribuer, comprenant, un premier épaulement (2) et un second épaulement (3), disposés face à face et adaptés pour contenir un cylindre (4) destiné à supporter une capsule (5) contenant une préparation pour boissons, un piston (17) utilisé pour fermer ladite capsule (5), adapté pour se déplacer dans une position dans laquelle ladite capsule (5) est insérée dans un réceptacle formé à l'intérieur dudit piston, de moyens de déplacement adaptés pour déplacer ledit piston, de moyens de verrouillage (10) adaptés pour permettre l'insertion de ladite capsule (5) et son verrouillage, lesdits moyens de verrouillage (10) étant mobiles pour permettre de passer d'une position de verrouillage de ladite capsule à une position, résultant du mouvement de translation dudit piston (17) adéquate pour permettre l'insertion de ladite capsule (5) dans ledit piston (17), lesdits moyens de verrouillage (10) étant adaptés pour empêcher le déplacement vers l'arrière de ladite capsule (5), lorsque ledit piston (17) revient à l'état inactif, ce qui permet ainsi à ladite capsule (5) de tomber pour être éliminée, lesdits moyens de verrouillage (10) comprenant deux bras (10), pivotant vers les surfaces latérales dudit cylindre de support (4) de la capsule, chacun desdits bras (10) étant doté d'une rainure de guidage (15), positionnée verticalement par rapport à l'axe longitudinal dudit cylindre (4), **caractérisé par le fait que** chacun desdits bras (10) est doté d'un plan incliné, ce qui est adéquat pour permettre l'engagement dudit piston (17) lorsque ledit piston effectue un mouvement de translation par rapport au dit cylindre de support de capsule (4), de façon à permettre l'écartement desdits bras (10) l'un par rapport à l'autre, afin de désengager la capsule desdits bras (10) et de permettre le positionnement de ladite capsule à l'intérieur du piston (17).

2. Ensemble à infusion selon la revendication 1, **caractérisé par le fait que** lesdits bras (10) sont dotés de moyens élastiques (14 ; 112) intercalés entre une extrémité desdits bras (10), à l'opposé de l'extrémité comportant la rainure de guidage (15), et de la surface latérale dudit cylindre de support de capsule (4).

3. Ensemble à infusion selon la revendication 1, **caractérisé par le fait que** chacun desdits épaulements (2, 3) comprend une fente (12) dont le contour est conforme au profil dudit bras (10) afin de permettre le passage dudit bras de sa position de verrouillage de ladite capsule (5) vers la position dans laquelle ladite capsule (5) est libérée en vertu de l'écartement desdits bras (10).

4. Ensemble à infusion selon une ou plusieurs des revendications précédentes, **caractérisé par le fait que** ledit piston (17) est adapté pour effectuer un mouvement de translation longitudinal par rapport au dit cylindre de support de capsule (4), en vertu du coulissement de son pivot transversal à l'intérieur de deux fentes se faisant face (21) formées dans le premier et dans le second épaulement (2, 3).

5. Ensemble à infusion selon une ou plusieurs des revendications précédentes, **caractérisé par le fait que** lesdits moyens adaptés pour générer le mouvement de translation dudit piston comprennent des moyens de levier (25), raccordés à une paire de liaisons (23) pivotant par rapport au dit piston (17),

6. Ensemble à infusion selon une ou plusieurs des revendications précédentes, **caractérisé par le fait que** ledit piston (17) utilisé pour fermer la capsule comprend, sur son côté faisant face à la capsule (5), un réceptacle (25) pour recevoir les moyens de support/perforation de ladite capsule.

7. Ensemble à infusion selon la revendication 5, **caractérisé par le fait que** lesdits moyens de levier (25) sont pivotés à l'extrémité desdits premier et second épaulements (2, 3).

8. Ensemble à infusion pour une machine conçue pour préparer des boissons et pour ensuite les distribuer, comprenant, un premier épaulement (2) et un second épaulement (3), disposés face à face et adaptés pour contenir un cylindre (4) destiné à supporter une capsule (5) contenant une préparation pour boissons, un piston (17) utilisé pour fermer ladite capsule (5), adapté pour se déplacer dans une position dans laquelle ladite capsule (5) est insérée dans un réceptacle formé à l'intérieur dudit piston, des moyens de déplacement adaptés pour déplacer ledit piston, des moyens de verrouillage (110) adaptés pour permettre l'insertion de ladite capsule (5) et son verrouillage, lesdits moyens de verrouillage (110) étant mobiles pour permettre de passer d'une position de verrouillage de ladite capsule à une position, résultant du mouvement de translation dudit piston (17) adéquate pour permettre l'insertion de ladite capsule (5) dans ledit piston (17), lesdits moyens de verrouillage (110) étant adaptés pour empêcher le déplacement vers l'arrière de ladite capsule (5), lorsque ledit piston (17) revient à l'état inactif, ce qui permet ainsi à ladite capsule (5) de tomber pour être éliminée, lesdits moyens de verrouillage (110) étant dotés d'une rainure, de guidage (114) positionnée sensiblement verticalement par rapport à l'axe londitudinal dudit cylindre (4), **caractérisé par le fait que** lesdits moyens de verrouillage comprennent deux blocs (110), qui sont raccordés audit premier épaulement (2) et audit second épaulement (3), chacun desdits blocs (110) étant doté d'une rainure de guidage (114), et **par le fait que** chacun desdits blocs (110) est doté d'un plan incliné, ce qui est adéquat pour permettre l'engagement dudit piston (17) losque ledit piston effectue un mouvement de translation par rapport au dit cylindre de support de capsule (4), de façon à permettre l'écartement desdits blocs (110) l'un par rapport à l'autre, afin de, désengager la capsule desdits blocs (110) et de permettre le positionnement de ladite capsule à l'intérieur du piston (17).

9. Ensemble à infusion selon la revendication 8, **caractérisé par le fait que** chacun desdits blocs (110) est placé dans une fente (12) dont la forme est complémentaire par rapport au dit bloc, ledit bloc étant vissé sur un autre bloc (111) placé sur l'extérieur de l'épaulement (2, 3), avec interposition d'un moyen élastique (112) pour permettre le mouvement de translation du bloc à angle droit par rapport au sens d'avancement dudit piston (17).

10. Ensemble à infusion selon la revendication 9, **caractérisé par le fait que** la rainure (114) dudit bloc (110) est formée par un épaulement formé dans ledit bloc (110) d'un côté et par l'épaulement opposé (118) de l'autre côté.

11. Ensemble à infusion selon la revendication 10, **caractérisé par le fait que** ledit épaulement et ledit épaulement opposé (118) sont rigides et formés d'une seule pièce avec ledit bloc (110).

12. Ensemble à infusion selon la revendication 10, **caractérisé par le fait que** ledit épaulement opposé (118) est un insert souple.

13. Ensemble à infusion selon une ou plusieurs des revendications 8 à 12, **caractérisé par le fait que** chacun desdits blocs (110) comporte un plan incliné, ce qui permet l'avancement dudit piston (17) pour s'engager dans ledit bloc (110), lorsque ledit piston effectue un mouvement de translation par rapport au dit cylindre de support de capsule (4), afin de permettre l'écartement réciproque desdits blocs afin de désengager ladite capsule (5) des blocs et de permettre le placement de ladite capsule dans ledit piston (17).

14. procédé pour l'infusion d'une boisson au moyen d'un ensemble à infusion selon une ou plusieurs des revendications précédentes, **caractérisé par le fait qu'**il comprend les étapes suivantes :
Insertion d'une capsule (5) dans l'ensemble à infusion, en insérant le bord périphérique de ladite capsule dans la paire de guides réciproquement opposés (15:114) desdits moyens de verrouillage (10 ; 110) ;
Génération du mouvement de translation dudit piston (17) en direction de ladite capsule (5) pour recevoir ladite capsule (5) à l'intérieur du piston (17), en écartant simultanément les moyens de verrouillage (10 ; 110) et en les désengageant du bord de la capsule (5) afin de permettre à ladite capsule (5) de pénétrer dans le réceptacle dudit piston (17) ;
Attendre la fin de l'infusion et la distribution de la boisson ;
Actionner le piston (17) pour le rétracter, afin de libérer ladite capsule (5) pour que lesdits moyens de verrouillage reviennent à leur position initiale, en empêchant ladite capsule (5) de se rétracter et en lui permettant de tomber.
